Europäisches Patentamt

European Patent Office

Office européen des brevets

(11) Veröffentlichungsnummer: **0 144 967**

**A2**

(12) ## EUROPÄISCHE PATENTANMELDUNG

(21) Anmeldenummer: **84114757.2**

(51) Int. Cl.⁴: **F 24 J 2/12**

(22) Anmeldetag: **04.12.84**

(30) Priorität: **07.12.83 DE 3344195**

(43) Veröffentlichungstag der Anmeldung:
**19.06.85 Patentblatt 85/25**

(84) Benannte Vertragsstaaten:
**AT BE CH DE FR GB IT LI NL SE**

(71) Anmelder: Kleinwächter, Jürgen, Dipl.-Phys.
Industriestrasse 8a
D-7850 Lörrach 6(DE)

(72) Erfinder: Kleinwächter, Jürgen, Dipl.-Phys.
Industriestrasse 8a
D-7850 Lörrach 6(DE)

(72) Erfinder: Kleinwächter, Hans, Prof. Dr.-Ing.
Industriestrasse 8-10
D-7850 Lörrach 6(DE)

(74) Vertreter: Rau, Manfred, Dr. Dipl.-Ing. et al,
Rau & Schneck, Patentanwälte Königstrasse 2
D-8500 Nürnberg 1(DE)

(54) **Membrankonzentrationsspiegel.**

(57) Bei einem aus einer Mehrzahl von miteinander verbundenen Folienbahnen, welche über einen Rahmen gespannt und mittels äußerer Kräfte verformt sind, aufgebauten Membrankonzentrationsspiegel ist zur stabilen, dichten Verbindung der einzelnen Folienbahnen und zur Formkorrektur des Spiegels vorgesehen, daß die einzelnen Folienbahnen durch Klemmprofile (1) verbunden sind. Weiterhin ist zur Korrektur der sich ausbildenden Spiegelkonfiguration vorgesehen, daß die Membran (7) anisotrop vorgespannt ist.

Fig 5

EP 0 144 967 A2

Membrankonzentrationsspiegel

---------------------------------------------------------

Die Erfindung richtet sich auf einen Membrankonzentrationsspiegel nach dem Oberbegriff von Anspruch 1 oder 2 und ein Verfahren zu seiner Herstellung.

Membranparaboloide, die durch pneumatische, hydraulische, elektrische, magnetische oder elektromagnetische Verformung ursprünglich planer Gesamtmembranen oder einzelner Membransektionen entstehen, bieten gegenüber herkömmlichen Sammelspiegeln den prinzipiellen Vorteil geringen Gewichtes und einfacher Herstellbarkeit. Diese Vorteile sind besonders relevant im Falle des Einsatzes als Sonnenenergiekonzentrationsspiegel. Da speziell dieser Anwendungsfall, aufgrund der relativ geringen Energiedichte der einfallenden Sonnenstrahlung von ca. 1 kW/m$^2$, große Sammelflächen nötig macht, stellt sich technologisch das Problem der mechanischen Stabilisierung großer, möglichst leichter Membranspiegel gegen die auftretenden, erheblichen Windkräfte.

Außerdem bildet die sich, insbesondere unter pneumatischer Verformung, einstellende Gleichgewichtsform nur näherungsweise die im Regelfalle gewünschte Paraboloidform aus. Eine elastische oder plastische Membran, die in der eingangs erwähnten Weise verformt wird und somit pneumatischen, hydraulischen Kräften unterworfen ist, nimmt nämlich eine räumliche Form an, die von der diese Fläche umschließende feste Randkurve und der im allgemeinen vom Orte abhängigen Normalspannung p und den beiden Membranhauptspannungen $\sigma_I$ und $\sigma_{II}$ abhängt.

Gemäß einer vorbekannten Lösung (P 29 32 645.2) wird der extrem leichte Membranspiegel unter eine transparente Schutzkuppel gestellt, die die mechanischen Windkräfte vom Spiegel fernhält und das Sonnenlicht passieren läßt. Der Vorteil dieser Anordnung besteht darin, daß extrem dünne, elastische Spiegelmembranen den Sammelspiegel bilden können, die Nachteile sind jedoch die durch die Schutzkuppel um ca. 1o% geminderte Strahlungsenergie und der erhebliche benötigte Aufwand zum Bau der letzteren, sowie die nur mäßig approximierte Parabelkontur.

Eine andere vorbekannte Lösung (P 27 4o 813) verzichtet auf eine Schutzkuppel, wobei dies jedoch nur unter Verwendung wesentlich dickerer, schwerer Membranen möglich ist. Zur Deformation dieser Membranen sind erheblich größere pneumatische Drücke oder eine plastische Verformung nötig.

Im ersteren Fall führt dies zu wesentlich größeren Strukturkräften und somit zu sehr schweren Konstruktionen, im zweiten Fall zu einer wesentlichen Komplikation des Herstellungsprozesses.

Hiervon ausgehend liegt der Erfindung die Aufgabe zugrunde, eine Konstruktion zu schaffen, die die Verwendung extrem dünner, elastischer Membranen ohne Schutzkuppel erlaubt und das Problem der Verbindung einzelner Membransektionen untereinander bei gleichzeitiger Möglichkeit der Korrektur der Kontur des Konzentrationsspiegels löst.

Diese Aufgabe wird gelöst durch den kennzeichnenden Teil von Anspruch 1. Dabei sind unter Klemmprofilen stabartige Profile zu verstehen, welche mit den Folienbahnen so verbunden sind, daß diese der Form der Klemmprofile folgen. Die Verwendung derartiger Klemmprofile macht es möglich, die Folienbahnen im Bereich der Klemmprofile luftdicht und zuverlässig zu verbinden, ohne daß hierfür auf bei Folien aufwendige, herkömmliche Verbindungstechniken zurückgegriffen werden muß. Gleichzeitig kann durch die Klemmprofile, welche mit den Folien verbunden sind, eine Formkorrektur herbeigeführt werden.

Die gemäß Anspruch 2 vorgesehene anisotrope Vorspannung ermöglicht eine sehr gute Korrektur von Membranspiegeln und ist grundsätzlich auch bei solchen anwendbar, welche lediglich aus einer einzigen Folienbahn hergestellt sind.

Anspruch 3 gibt eine besonders einfache Ausgestaltung der Klemmprofile an, während Anspruch 4 eine etwas kompliziertere Konstruktion derselben betrifft, welche dafür jedoch weitergehende Korrekturmöglichkeiten eröffnet.

Die Ausgestaltung der Klemmprofile gemäß Anspruch 5 begünstigt eine dichte Verbindung benachbarter Folienbahnen und stellt sicher, daß tangentiale Kräfte zuverlässig aufgenommen werden. Dies wird insbesondere durch die weitere Ausgestaltung nach Anspruch 6 zuverlässig bewerkstelligt.

Die Ansprüche 7 und 8 geben Verfahren zur Herstellung von Membrankonzentrationsspiegeln mit definierter Vorspannung an.

Weitere Merkmale, Vorteile und Einzelheiten der Erfindung ergeben sich aus der folgenden Beschreibung einiger bevorzugter Ausführungsformen anhand der Zeichnung. Dabei zeigen

Fig. 1 eine schematische Darstellung der Zusammensetzung einer Membran aus Folienteilbahnen,

Fig. 1A eine weitere Möglichkeit der Zusammensetzung einer Membran aus Folienteilbahnen,

Fig. 2 einen schematischen Schnitt durch eine aus drei Bahnen zusammengesetzte Folie,

Fig. 3 einen Schnitt durch eine Klemmleiste zur Verbindung zweier benachbarter Folien,

Fig. 4 eine schematische Darstellung der Einspannung einer Membran in starre Klemmprofile,

Fig. 5 eine schematische Darstellung der Einspannung einer Membran in mittels Stellschrauben elastisch deformierbare Klemmprofile,

Fig. 6 den Verlauf von Klemmprofilen längs der Nähte von Folienbahnen,

Fig. 7 ein Beispiel für die Einspannung der Klemmprofile gemäß Fig. 6,

Fig. 8 die Verwendung elastisch deformierbarer Klemmprofile bei einer durch Unterdruck verspannten Membran,

Fig. 9 ein Mantelflächenelement einer Membran der Dicke s,

Fig.1o ein Paraboloid mit Schnittfläche und die schematische Darstellung eines Hilfsrahmens zur anisotropen Vorspannung eines Membranteils, und

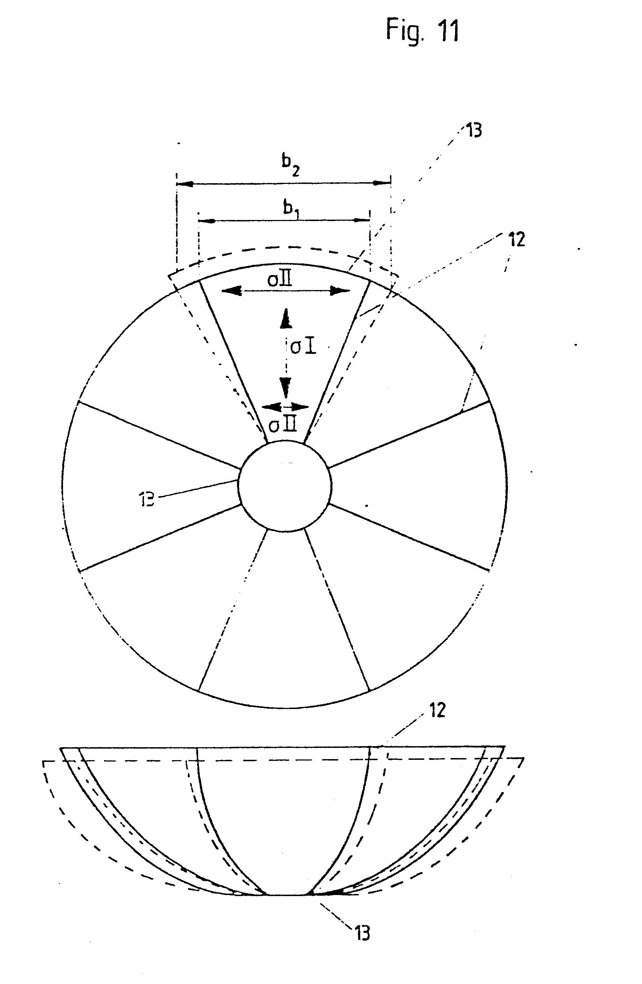

Fig.11 eine schematische Aufsicht und Seitenansicht eines verspannbaren, kreisrund begrenzten Rotationsparaboloiden.

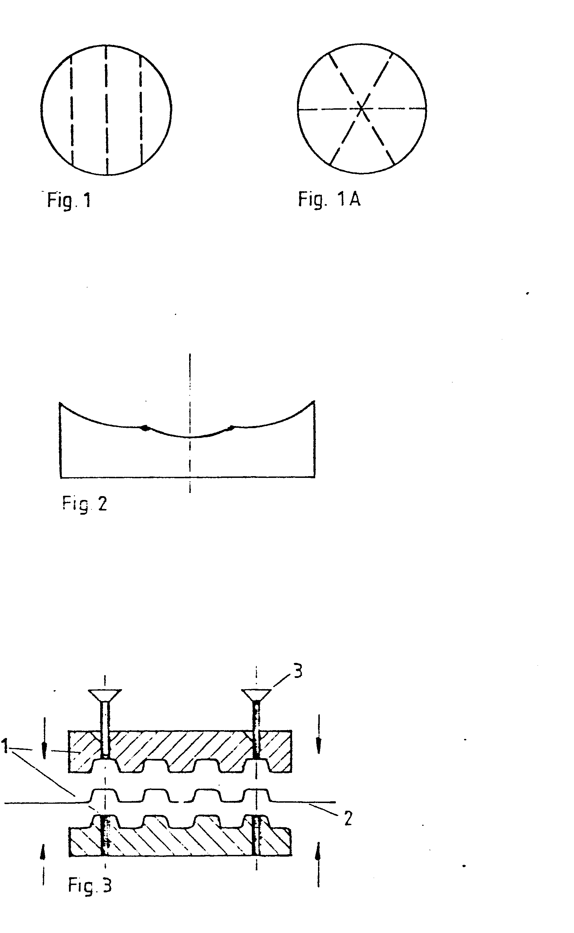

Membrankonzentrationsspiegel der in Betracht stehenden Art müssen dann, wenn sie entsprechend ihrem vorzugsweisen Einsatzbereich einen verhältnismäßig großen Durchmesser aufweisen, aus mehreren Folienpaaren zusammengesetzt werden, da die verwendbaren Folien nur in einer beschränkten Breite hergestellt werden und verfügbar sind. Dies kann entweder in Form von zueinander parallelen, miteinander verbundenen Bahnen erfolgen (vgl. Fig. 1) oder indem aus den Folienbahnen Segmente geschnitten werden, welche miteinander verbunden werden (vgl. Fig.1A).

Neben dem technisch schwierigen Problem, die einzelnen Folienbahnen luftdicht zu verbinden, stellen die Nahtstellen aufgrund ihrer von der übrigen Membran sich
unterscheidenden Dicke Störbereiche dar, da in diesen
Bereichen die Gleichgewichtsform der Membran unterbrochen wird (vgl. Fig.2), was zu optischen Abbildungsfehlern führt.

Hier wird erfindungsgemäß dadurch Abhilfe geschaffen,
daß die einzelnen Folienbahnen mittels entsprechend
der gewünschten Membrankonfiguration geformter Klemmprofile verbunden werden. Diese Klemmprofile stellen
damit nicht nur die Verbindung der Folienabschnitte
her und machen eine anderweitige Verbindung, z.B.
durch Schweißen, Kleben oder Nähen entbehrlich, sondern
wirken auch korrigierend auf die sich aufgrund des
Unter- oder Überdrucks ausbildende Form der Membran
ein.

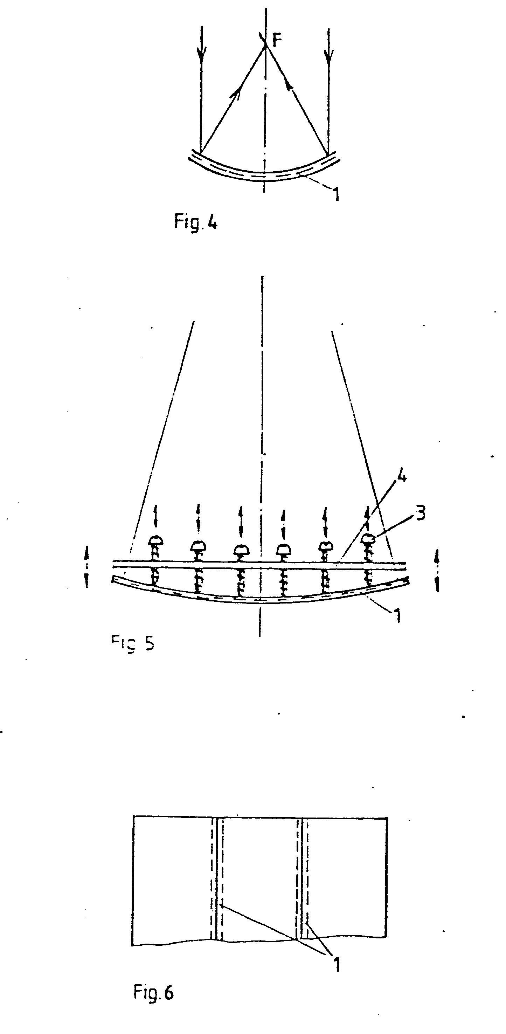

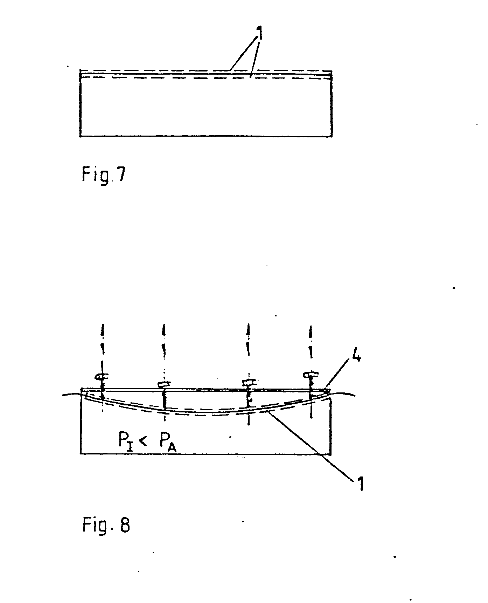

Die Klemmprofile können dabei entweder eine feste
vorgegebene, in sich starre und freitragende Form,
z.B. die einer Parabel vorgegebener Brennweite, aufweisen (vgl. Fig. 4) oder elastisch verformbar ausgebildet
sein und durch äußere Kräfte in einer gewünschten
Form veränderbar fixiert werden (vgl. Fig. 5).

Fig. 3 zeigt einen Schnitt durch ein Klemmprofil 1.
Das Klemmprofil 1 umfaßt zwei Hälften 11, deren Innenseite eine Zahnung 12 derart aufweist, daß die Zahnungen
12 der beiden Klemmprofilhälften 11 beim Zusammenfügen
derselben ineinandergreifen. Die in Fig. 3 obere Klemmprofilhälfte 11 weist Schrauben 13 auf, welche in
Gewindebohrungen 14 der in Fig. 3 unteren Klemmprofilhälfte 11 eingreifen und auf diese Weise eine feste
Verbindung der beiden Klemmprofilhälften 11 ermöglichen.

Zwischen die Verzahnungen 12 können die Randbereich von Folienbahnen 2 eingelegt werden. Durch das Anziehen der Schrauben 13 werden damit die Folienbahnen 2 in dem Klemmprofil 1 fixiert, wobei die Zahnungen 12 sowohl die Dichtflächen vergrößern und damit für eine zuverlässige Luftabdichtung sorgen wie auch ein seitliches Herausziehen der Folienbahnen 2 zuverlässig unterbinden.

In Fig. 5 ist dargestellt, wie ein im Gegensatz zur Ausführungsform gemäß Fig. 4 nicht eigensteifes Klemmprofil, d.h. ein elastisch deformierbares Klemmprofil 1 eine definierte Form mittels einer Mehrzahl von Spannschrauben 15 erhalten kann. Die Spannschrauben 15 sind in Gewindebohrungen 16 in einer ortsfesten, starren, an der Außenseite der Membran (Folien 2) angeordneten Leiste 17 befestigt. Die Enden des Klemmprofils 1 sind, wie im einzelnen nicht dargestellt, eingespannt. Durch ein Verstellen der Spannschrauben 15 in Richtung der Pfeile P kann die Krümmung der Profilleiste 1 verändert werden. Hierdurch ist es in Abhängigkeit von der Zahl der vorgesehenen Spannschrauben 15 möglich, die Biegung des Klemmprofils und damit die Qualität der optischen Abbildung zu justieren. Die Fig. 6 bis 8 veranschaulichen dies anhand eines Membrankonzentrationsspiegels, welcher über einen trommelartigen Rahmen 18 gespannt ist, wobei im Inneren des Rahmens Unterdruck herrscht, d.h. der Druck $P_I$ in diesem Bereich ist kleiner als der Außendruck $P_A$.

Durch die vorstehend beschriebenen Ausgestaltungen ist es möglich, einen Membrankonzentrationsspiegel als solchen gegen Außeneinflüsse zu stabilisieren, den Aufbau des Membrankonzentrationsspiegels aus mehreren Folienbahnen problemlos vorzunehmen und darüber hinaus noch eine Formkorrektur durchzuführen.

Für zahlreiche Anwendungsgebiete ist die hierdurch erzielbare Abbildungsgenauigkeit völlig ausreichend. Es gibt jedoch Anwendungsgebiete, wo eine Korrektur über den unmittelbaren Umgebungsbereich der Klemmprofile hinaus wünschenswert erscheint, da die Raumform der Membran zwischen den Klemmprofilen sich ja als Gleichgewichtszustand der hieran angreifenden Kräfte, d.h. von Außendruck $P_A$, Innendruck $P_I$ und der Membranspannungen einstellt. Dabei sind als wesentliche Spannungen zu betrachten die Normalspannung p und die beiden Membranhauptspannungen $\sigma_I$ und $\sigma_{II}$.

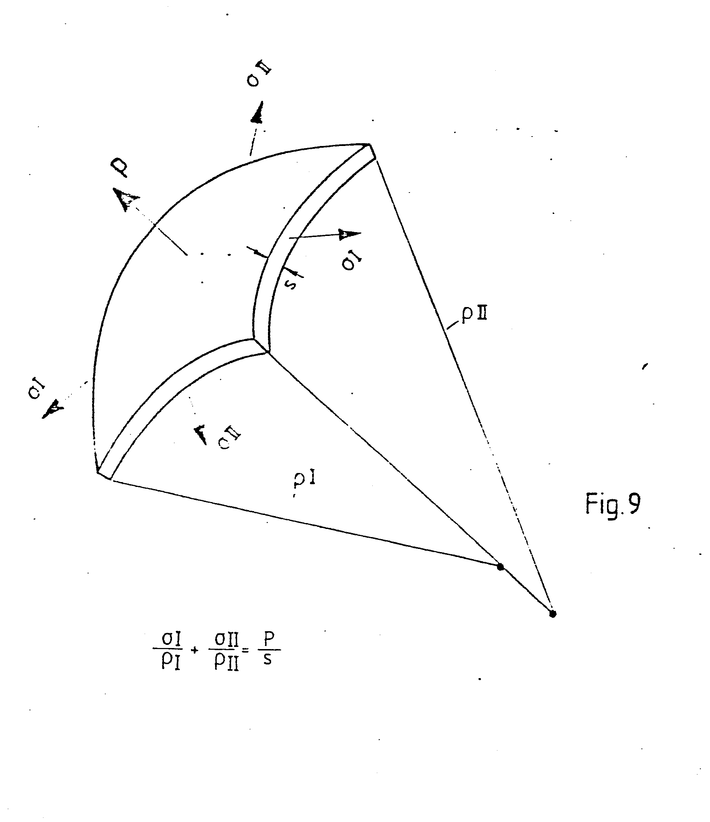

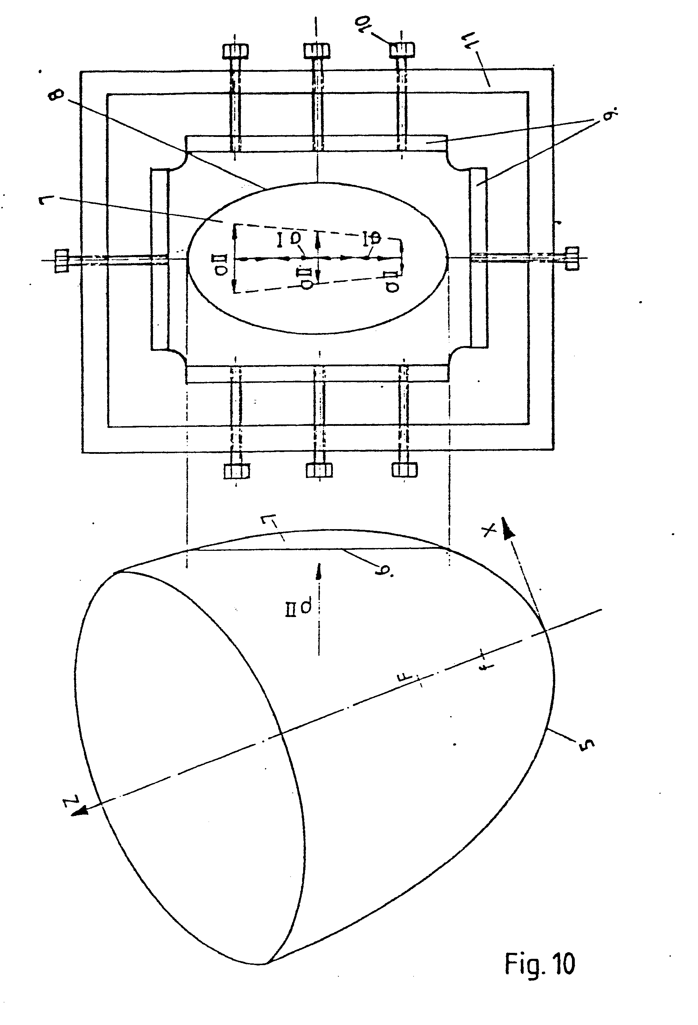

Zur Verdeutlichung der Situation stellt die Fig. 9 ein beliebiges Mantelflächenelement der Dicke s dar. Der Zusammenhang zwischen den beiden Hauptkrümmungsradien $\rho_I$ und $\rho_{II}$, den zugehörigen Hauptspannungen $\sigma_I$ und $\sigma_{II}$ und der Normalspannung p ergibt sich zu:

$$\frac{\sigma_I}{\rho_I} + \frac{\sigma_{II}}{\rho_{II}} = \frac{P}{S} \qquad \text{Gleichung 1}$$

Im Sonderfalle einer kugelförmig deformierten Membran wird $\rho_I = \rho_{II}$ und $\sigma_I = \sigma_{II}$ (isotrope Spannung).

Für ein Rotationsparaboloid der Brennweite f, dessen erzeugende Parabel durch:

$$z = \frac{x^2}{4f} \qquad \text{Gleichung 2}$$

gegeben ist, ist das Verhältnis der Hauptkrümmungsradien:

$$\frac{\rho_{II}}{\rho_{I}} = 1 + \left(\frac{x}{2f}\right)^2 \qquad \text{Gleichung 3}$$

Nur in Scheitelnähe ($X \ll f$) geht $\dfrac{\rho_{II}}{\rho_{I}} \to 1$

d.h., in diesem Bereich ist die Gleichgewichtsfläche der Membran kugelkalottenförmig.

Im weiter außen liegenden Bereich wird $\dfrac{\rho_{II}}{\rho_{I}} > 1$, die Membranform erhält einen zylindrischen Charakter. Aus diesem Grunde muß erfindungsgemäß im allgemeinen

$$\frac{\sigma_{I}}{\sigma_{II}} \qquad \text{gemäß Gleichung 3}$$

so von x abhängig sein, daß $\dfrac{P}{s} = \dfrac{\sigma_{I}}{\rho_{I}} + \dfrac{\sigma_{II}}{\rho_{II}}$

konstant bleibt, d.h., die Membran muß anisotrop vorgespannt werden.

Ausgehend von dieser Erkenntnis ist erfindungsgemäß eine Feinkorrektur dadurch vorgesehen, daß Teile der Membran, z.B. einzelne Folienabschnitte, mit Hilfe eines Hilfsrahmens in definierter Weise anisotrop vorgespannt werden und diese Vorspannung dann durch Anziehen entsprechend geformter Klemmprofile fixiert wird. Insbesondere kann ein derartiges Vorgehen vorteilhaft vorgesehen werden, wenn ein Spiegel nicht durch ein vollständiges Paraboloid gebildet werden soll, sondern wenn ein Ausschnitt eines derartigen Paraboloids als Spiegel verwendet wird, welcher dann dem sich ändernden Sonnenstand entsprechend nachgeführt wird.

Diesen Fall veranschaulicht schematisch Fig. 1o. Dort ist ein Paraboloid mit einem Mantel 5 und einer elliptischen Schnittkurve 6 vorgesehen. Weiterhin ist eine Spiegel-Membran 7 dargestellt. Diese Spiegel-Membran 7 soll zur Erstellung eines Spiegels der vorstehend genannten Art in einen elliptischen Einspannrahmen 8 eingespannt werden. Dies wird mittels eines Hilfsrahmens 11o mit Zugschrauben 1oo realisiert. Mit Hilfe der Zugschrauben 1oo kann eine anisotrope Vorspannung so eingestellt werden, daß die von Z abhängige Hauptspannung der gewünschten Bedingung genügt. Ist eine derartige anisotrope Vorspannung eingestellt, werden die in Fig. 1o im einzelnen nicht dargestellten Fixierschrauben des elliptischen Einspannrahmens 8 festgelegt, d.h. die Membran wird mit definierter anisotroper Spannung fixiert.

In Fig. 11 ist der in der Praxis am häufigsten vorkommende Fall eines kreisrund begrenzten Rotationsparaboloiden dargestellt. Der Spiegel ist dabei, entsprechend Fig. 1A, in einzelne Folien-Sektoren unterteilt. Jeder Sektor wird demnach durch zwei auf dem Paraboloid liegende Parabeln 12o und zwei koaxiale Kreisabschnitte 13o begrenzt. Zur Ausbildung eines exakten Paraboloids wird nun gefordert, daß die von Z abhängige Vorspannung in der durch Gleichung 1 bezeichneten Weise ausgeührt wird. Erfindungsgemäß wird dies durch eine Korrektur derart erreicht, daß die Abmessung des äußeren koaxialen Kreisabschnitts von der ursprünglichen Breite b1 zur Breite b2 vergrößert wird.

Patentansprüche

1. Aus einer Mehrzahl von miteinander verbundenen
Folienbahnen, welche über einen Rahmen gespannt und
mittels äußerer Kräfte verformt sind, aufgebauter
Membrankonzentrationsspiegel, dadurch gekennzeichnet,
daß die einzelnen Folienbahnen durch Klemmprofile
(1) verbunden sind.

2. Membrankonzentrationsspiegel, insbesondere nach
Patentanspruch 1, dadurch gekennzeichnet, daß die
Membran (7) anisotrop vorgespannt ist.

3. Membrankonzentrationsspiegel nach Patentanspruch 1,
dadurch gekennzeichnet, daß die Klemmprofile (1) eigensteif ausgebildet sind.

4. Membrankonzentrationsspiegel nach Patentanspruch
1 dadurch gekennzeichnet, daß die Klemmprofile (1)
elastisch verformbar ausgebildet sind und sich über
Spannschrauben (15) an starren Justierstäben (17)
abstützen.

5. Membrankonzentrationsspiegel nach einem der Patentansprüche 1 bis 4, dadurch gekennzeichnet, daß die Klemmprofile (1) aus zwei miteinander verbindbaren Teilen
(11) ausgebildet sind, zwischen welche die Ränder
benachbarter Folienbahnen zur Verbindung derselben
einlegbar sind.

6. Membrankonzentrationsspiegel nach Patentanspruch
5, dadurch gekennzeichnet, daß die Hälften (11) der
Klemmleisten (1) eine Zahnung (12) aufweisen.

7. Verfahren zur Herstellung eines Membrankonzentrationsspiegels, insbesondere nach Patentanspruch 2, dadurch
gekennzeichnet, daß ein starrer Hilfsrahmen mit Stellschrauben in zwei zueinander senkrechten Richtungen
verwendet wird, wobei die Stellschrauben beiderseits
an einem vorzuspannenden Membranabschnitt angreifen
und entsprechend einer gewünschten anisotropen Vorspannung
eingestellt werden, wobei anschließend der vorgespannte
Membranabschnitt mittels eines diesen umschließenden
Klemmrahmens eingespannt und so die definierte Vorspannung fixiert wird.

8. Verfahren zur Herstellung eines Membrankonzentrationsspiegels, insbesondere nach Patentanspruch 2, umfassend
eine Rotationsparaboloid mit kreisförmiger Basis,
welches aus einer Mehrzahl von Foliensektoren hergestellt
ist, dadurch gekennzeichnet, daß zur Einstellung einer
gewünschten Vorspannung der Basisumfang vergrößert
wird.

Fig. 1

Fig. 1A

Fig. 2

Fig. 3

Fig. 4

Fig 5

Fig.6

Fig.7

$P_I < P_A$

Fig. 8

Fig.9

$$\frac{\sigma I}{\rho I} + \frac{\sigma II}{\rho II} = \frac{P}{s}$$

Fig. 10

Fig. 11